# EUROPÄISCHE PATENTSCHRIFT

(11) **EP 2 108 535 B1**
(45) Veröffentlichungstag und Bekanntmachung des Hinweises auf die Patenterteilung: **12.10.2011**
(21) Anmeldenummer: 08290354.3
(22) Anmeldetag: 11.04.2008
(51) Int. Cl.: B60H 1/00

(54) **Klimaanlage für ein Kraftfahrzeug**
Air conditioning for a motor vehicle
Climatisation pour un véhicule automobile

(43) Veröffentlichungstag der Anmeldung: 14.10.2009
(73) Patentinhaber: Behr France Rouffach SAS, 68250 Rouffach (FR)
(72) Erfinder: Lenotte, Vincent, 68124 Logelbach (FR)
(74) Vertreter: Grauel, Andreas

(56) Entgegenhaltungen:
- EP-A- 1 225 071
- WO-A-2004/101302
- DE-A1-102007 019 382
- US-A1- 2006 000 595
- US-B1- 6 581 678

## Beschreibung

Die Erfindung betrifft eine Klimaanlage für ein Kraftfahrzeug, umfassend eine Komponente zur Beaufschlagung eines Teils, insbesondere eines hinteren Teils, des Innenraumes des Kraftfahrzeuges mit wenigstens einem Gehäuse zur Aufnahme wenigstens eines Kältemittelverdampfers mit wenigstens einer Eintrittsöffnung und wenigstens einer Austrittsöffnung, wenigstens einen in dem Gehäuse angeordneten Kältemittelverdampfer und wenigstens ein Gebläse mittels der zu kühlende Luft durch die wenigstens eine Eintrittsöffnung, den wenigstens einen Kältemittelverdampfer und die wenigstens eine Austrittsöffnung leitbar ist, wobei die Temperatur der aus der wenigstens einen Austrittsöffnung austretenden Luft steuerbar und/oder regelbar ist.

Klimaanlagen werden in Kraftfahrzeugen eingesetzt, um die den Innenraum des Kraftfahrzeuges zuzuführende Luft zu Kühlen und/oder zu Erwärmen. In größeren Kraftfahrzeugen, z. B. Kleintransportern, kommen in zunehmenden Maße Klimaanlagen zum Einsatz, welche in der Lage sind, den vorderen Teil und den hinteren Teil eines Kraftfahrzeuges unabhängig voneinander mit Luft zu beaufschlagen. Die Klimaanlage besteht somit aus zwei separaten Komponenten, die getrennt für den vorderen und den hinteren Teil zuständig sind. Die Temperatur der dem Innenraum zugeführten Luft kann damit separat für beide Teile des Kraftfahrzeuges gesteuert und/oder geregelt werden. Dabei umfasst die für den hinteren Teil des Kraftfahrzeuges zuständige Komponente der Klimaanlagen einen eigenen zusätzlichen Verdampfer, wobei mittels einer Luftklappe und einem Bypasskanal die durch eine Eintrittsöffnung eingeleitete Luft wenigstens teilweise an einem Kältemittelverdampfer vorbei leitbar ist, so dass die Temperatur der aus einer Austrittsöffnung austretenden Luft steuerbar und/oder regelbar ist. Diese für den hinteren Teil des Kraftfahrzeuges zuständige Komponente der Klimaanlage kann jedoch nicht separat die Temperatur der dem hinteren linken und dem hinteren rechten Teil des Innenraumes des Kraftfahrzeuges zugeführten Luft steuern und/oder regeln.

Die WO 2004/101302 A1 zeigt eine Klimaanlage für einen Omnibus. Die Klimaanlage besteht aus vier Baueinheiten bzw. Klimaanlagen, in denen in einem Gehäuse je ein Verdampfer und je ein Kondensator angeordnet sind. Eine Luftklappe gestattet es, die dem Verdampfer und dem Kondensator zugeführte Luft zu steuern. Jede Baueinheit bzw. Klimaanlage dient nur zur Beaufschlagung des rechten oder linken Teils des Omnibusses.

US 2006/0000595 offenbart eine Klimaanlage nach dem Oberbegriff des Anspruchs 1.

Die Aufgabe der vorliegenden Erfindung besteht deshalb darin, eine Klimaanlage zur getrennten und unabhängigen Beaufschlagung eines hinteren linken und rechten Teiles eines Kraftfahrzeuges zur Verfügung zu stellen, die in den Abmessungen klein und kompakt aufgebaut ist. Ferner soll die Klimaanlage in der Herstellung preiswert sein und einen einfachen Aufbau aufweisen sowie zuverlässig im Betrieb arbeiten.

Diese Aufgabe wird gelöst mit einer Klimaanlage für ein Kraftfahrzeug, umfassend eine Komponente zur Beaufschlagung eines Teils, insbesondere eines hinteren Teils, des Innenraumes des Kraftfahrzeuges mit wenigstens einem Gehäuse zur Aufnahme wenigstens eines Kältemittelverdampfers mit wenigstens einer Eintrittsöffnung und wenigstens einer Austrittsöffnung, wenigstens einen in dem Gehäuse angeordneten Kältemittelverdampfer und wenigstens ein Gebläse mittels der zu kühlende Luft durch die wenigstens eine Eintrittsöffnung, den wenigstens einen Kältemittelverdampfer und die wenigstens eine Austrittsöffnung leitbar ist, wobei, vorzugsweise mittels wenigstens einer Umlenkeinrichtung, z. B. wenigstens einer Luftklappe, und vorzugsweise wenigstens eines Bypasskanals die durch die wenigstens eine Eintrittsöffnung eingeleitete Luft wenigstens teilweise an dem wenigstens einen Kältemittelverdampfer vorbei leitbar ist, so dass die Temperatur der aus der wenigstens einen Austrittsöffnung austretenden Luft steuerbar und/oder regelbar ist, wobei die Komponente dahingehend ausgebildet ist, dass die Temperatur der einem linken Teil, insbesondere einem linken hinteren Teil, und einem rechten Teil, insbesondere einem rechten hinteren Teil, des Innenraumes zugeführten Luft unabhängig voneinander steuerbar und/oder regelbar ist. Damit können der linke hintere und der rechte hintere Teil des Innenraumes getrennt mit Luft von unterschiedlicher Temperatur beaufschlagt werden.

Die Komponente umfasst eine erste Austrittsöffnung zur Beaufschlagung des linken Teils, insbesondere des linken hinteren Teils, des Kraftfahrzeuges und eine zweite Austrittsöffnung zur Beaufschlagung des rechten Teils, insbesondere des rechten hinteren Teils, des Kraftfahrzeuges.

Die Komponente umfasst eine erste Eintrittsöffnung zum Ansaugen der dem linken Teil, insbesondere dem linken hinteren Teils, des Kraftfahrzeuges zuzuführenden Luft und eine zweite Eintrittsöffnung zum Ansaugen der dem rechten Teil, insbesondere dem rechten hinteren Teil, des Kraftfahrzeuges zuzuführenden Luft umfasst.

In dem Gehäuse der Komponente ist ein Kältemittelverdampfer von einer Trennwand in einen ersten Teil für den linken Teil, insbesondere dem linken hinteren Teil, des Kraftfahrzeuges und in einen zweiten Teil für den rechten Teil, insbesondere dem rechten hinteren Teil, des Kraftfahrzeuges unterteilt.

In eine weiteren Variante umfasst die Komponente einen ersten Kältemittelverdampfer für den linken Teil, insbesondere dem linken hinteren Teil, des Kraftfahrzeuges und ein zweiten Kältemittelverdampfer für den rechten Teil, insbesondere dem rechten hinteren Teil, des Kraftfahrzeuges.

In einer zusätzlichen Ausgestaltung sind der erste Kältemittelverdampfer in einem ersten Gehäuse und der zweite Kältemittelverdampfer in einem zweiten Gehäuse angeordnet oder der erste und zweite Kältemittelverdampfer sind in einem Gehäuse angeordnet, wobei der erste Kältemittelverdampfer von dem zweiten Kältemittelverdampfer mittels einer Trennwand voneinander getrennt ist.

Die Luft ist getrennt durch den ersten und zweiten Teil des Kältemittelverdampfers oder durch den ersten und zweiten Kältemittelverdampfer leitbar.

In einer ergänzenden Ausführungsform ist mittels einer ersten Umlenkeinrichtung und einem ersten Bypasskanal der Anteil der durch die erste Eintrittsöffnung strömende Luft, welcher durch den ersten Teil des Kältemittelverdampfers oder dem ersten Kältemittelverdampfer leitbar ist, steuerbar und/oder regelbar und getrennt hiervon ist mittels einer zweiten Umlenkeinrichtung und einem zweiten Bypasskanal der Anteil der durch die zweite Eintrittsöffnung strömende Luft, welcher durch den zweiten Teil des Kältemittelverdampfers oder dem zweiten Kältemittelverdampfer leitbar ist, steuerbar und/oder regelbar.

Vorzugsweise ist die ersten und zweite Umlenkeinrichtung als eine erste und zweite Luftklappe ausgebildet und mittels eines getrennten Verschwenkens der ersten und zweiten Luftklappe ist die Temperatur der dem linken Teil, insbesondere dem linken hinteren Teil, und dem rechten Teil, insbesondere dem rechten hinteren Teil, des Innenraumes zugeführten Luft unabhängig voneinander steuerbar und/oder regelbar.

In einer ergänzenden Ausgestaltung ist getrennt von einer ersten Heizeinrichtung, insbesondere einem PTC-Heizelement, die dem linken Teil, insbesondere dem linken hinteren Teil, des Kraftfahrzeuges zuzuführende Luft erwärmbar und von einer zweiten Heizeinrichtung, insbesondere einem PTC-Heizelement, ist die dem rechten Teil, insbesondere dem rechten hinteren Teil, des Kraftfahrzeuges zuzuführende Luft erwärmbar.

Zweckmäßig umfasst die Klimaanlage eine weitere Komponente mit einem, vorzugsweise vorderen Gehäuse, einem, vorzugsweise vorderen, Kältemittelverdampfer, einem, vorzugsweise vorderen, Gebläse und einer, vorzugsweise vorderen, Heizeinrichtung zur Beaufschlagung eines anderen, vorzugsweise vorderen, Teils des Innenraums des Kraftfahrzeuges und optional eines weiteren, vorzugsweise hinteren, Teils des Innenraumes des Kraftfahrzeuges.

In einer weiteren Ausgestaltung stammt die der Komponente zugeführte Luft aus dem Innenraum des Kraftfahrzeuges und/oder unmittelbar von der weiteren Komponente und/oder aus der Umgebungsluft des Kraftfahrzeuges. Zweckmäßig mündet der wenigstens eine Bypasskanal in die wenigstens eine Austrittsöffnung.

In einer weiteren Variante ist der wenigstens eine Bypasskanal von der wenigstens einen Umlenkeinrichtung wenigstens teilweise verschließbar.

In einer zusätzlichen Ausführungsform ist eine Wandung des wenigstens einen Bypasskanals von dem wenigstens einen Kältemittelverdampfer gebildet ist.

In einer bevorzugten Ausgestaltung ist in Strömungsrichtung der zu kühlenden Luft nach dem wenigstens einen Kältemittelverdampfer wenigstens eine Heizeinrichtung angeordnet.

Im Nachfolgenden wird ein Ausführungsbeispiel der Erfindung unter Bezugnahme auf die beigefügten Zeichnungen näher beschrieben. Es zeigt:
- Fig. 1: eine perspektivische Ansicht einer Komponente einer Klimaanlage zur Beaufschlagung eines Teils eines Innenraumes eines Kraftfahrzeuges,
- Fig. 2: einen Querschnitt der Klimaanlage gemäß Fig. 1 entlang einer Schnittlinie A-A in Fig. 1,
- Fig. 3: einen Querschnitt der Klimaanlage gemäß Fig. 1 entlang der Schnittlinie B-B in Fig. 1 und
- Fig. 4: einen stark schematisierten Querschnitt der Klimaanlage gemäß Fig. 1 mit einem ersten und zweiten Gebläse.

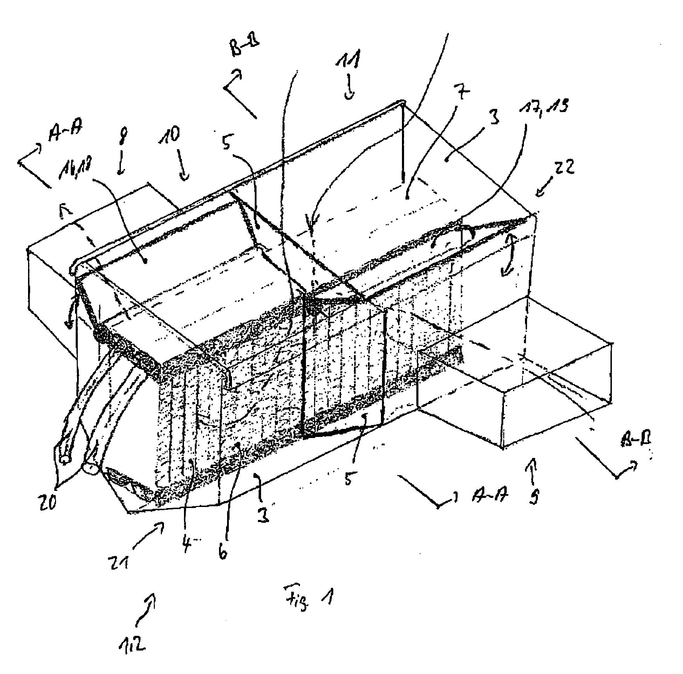

Figur 1 zeigt eine perspektivische Ansicht einer Komponente 2 einer Klimaanlage 1 für ein Kraftfahrzeug. Die Komponente 2 dient dazu, den hinteren Teil des Innenraumes eines Kraftfahrzeuges zu kühlen. Neben der Komponente 2 weist die Klimaanlage 1 eine weitere Komponente mit einem vorderen Gehäuse, Kältemittelverdampfer, Gebläse und Heizeinrichtung auf, welche den vorderen Teil des Innenraumes des Kraftfahrzeuges kühlt und/oder erwärmt (nicht dargestellt).

Die Komponente 2 umfasst ein Gehäuse 3, in dem ein Kältemittelverdampfer 4 angeordnet ist. Eine Trennwand 5 unterteilt den Kältemittelverdampfer 4 und das Gehäuse 3 in einen ersten Teil 6 für den linken hinteren Teil des Innenraumes des Kraftfahrzeuges und einen zweiten Teil 7 für den rechten hinteren Teil des Innenraumes des Kraftfahrzeuges. Zwei Kältemittelleitungen 20 versorgen den Kältemittelverdampfer 4 mit Kältemittel aus einem Kältemittelkreislauf mit einem Kondensator und einem Verdichter (nicht dargestellt).

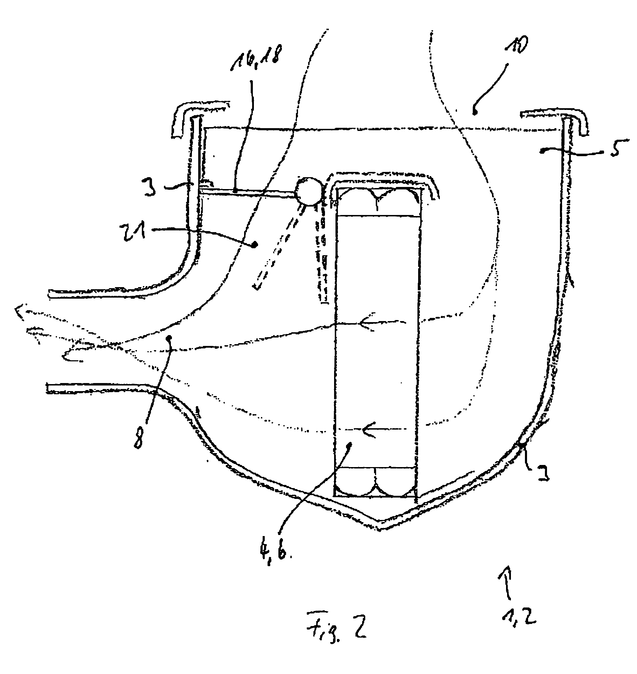

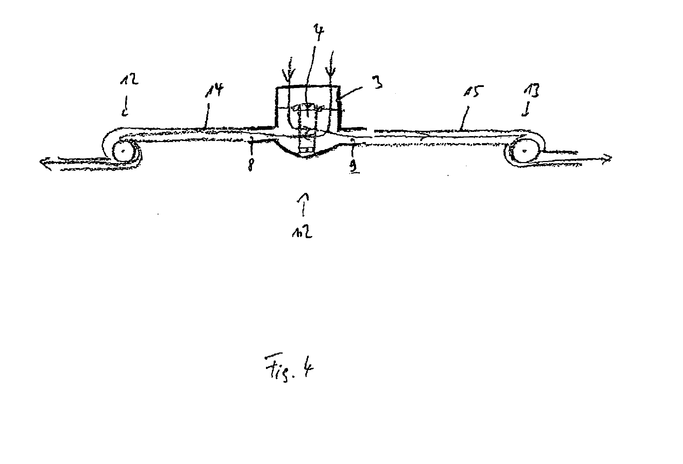

Der erste Teil 6 des Gehäuses 3 ist mit einer ersten Eintrittsöffnung 10 versehen, die in den ersten Teil 6 des Gehäuses 3 mündet. Außerdem befindet sich an dem ersten Teil 6 des Gehäuses 3 eine erste Austrittsöffnung 8 (Fig. 1, 2). Die für den linken hinteren Teil des Innenraumes bestimmte Luft strömt durch die erste Eintrittsöffnung 10 in den ersten Teil 6 des Gehäuses 3 ein, verlässt durch die zweite Austrittsöffnung 8 das Gehäuse 3 und strömt durch einen ersten Luftaustrittskanal 14 mit einem ersten Gebläse 12 (Fig. 4) in den linken hinteren Teil des Innenraumes des Kraftfahrzeuges. Die Luft für den linken hinteren Teil des Innenraumes wird mittels des Gebläses 12 gefördert.

In der In Fig. 2 dargestellten Position einer als erste Luftklappe 16 ausgebildeten ersten Umlenkeinrichtung 18 ist ein erster Bypasskanal 21 in dem ersten Teil 6 des Gehäuses 3 verschlossen, so dass die gesamte von dem ersten Gebläse 12 in die erste Eintrittsöffnung 10 eingesaugte Luft durch den ersten Teil 6 des Kältemittelverdampfers 4 strömen muss. Der Kältemittelverdampfer weist beispielsweis eine Temperatur von 5° C, die in die erste Eintrittsöffnung 10 eingeleitete Luft weist eine Temperatur von 25° C auf und die Temperatur der aus der ersten Austrittsöffnung 8 austretenden Luft beträgt damit beispielsweise 10° C. Die erste Luftklappe 16 ist beliebig um eine Achse verschenkbar und kann beispielsweise in die in Fig. 2 strichliert dargestellten Positionen verschwenkt werden, so dass ein Teil der durch die erste Eintrittsöffnung 10 einströmenden Luft nicht durch den Kältemittelverdampfer 4, sondern an diesem vorbei durch den ersten Bypasskanal 21 strömt und dadurch nicht oder verrachlässigbar von dem Kältemittelverdampfer 4 gekühlt wird. In den in den Fig. 2 dargestellten beiden Positionen der ersten Luftklappe 16 beträgt die Temperatur der die erste Austrittsöffnung 8 verlassenden Luft beispielsweise 16° C und 20° C. Die Stellung der ersten Luftklappe 16 gestattet es somit den Anteil der Luft, welcher durch den ersten Teil 6 des Kältemittelverdampfers 4 strömt zu steuern und/oder zu regeln, so dass auch die Temperatur der für den linken hinteren Teil des Innenraumes bestimmten Luft steuerbar und/oder regelbar ist.

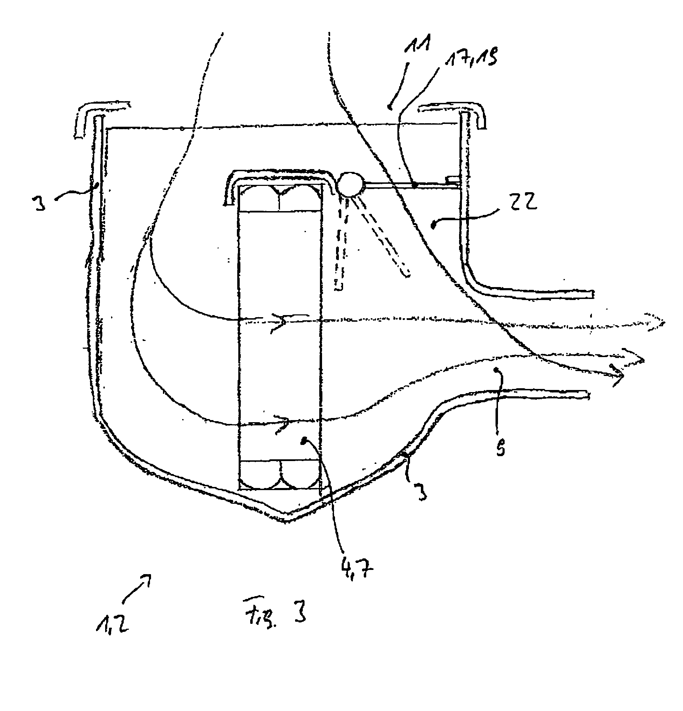

In analoger Weise ist der zweite Teil 7 des Gehäuses 3 ist mit einer zweiten Eintrittsöffnung 11 und einer zweiten Austrittsöffnung 9 versehen, die in den zweiten Teil 7 des Gehäuses 3 mündet (Fig. 3). Die aus der zweiten Austrittsöffnung 9 ausströmende Luft wird mittels eines zweiten Gebläses 13 durch einen zweiten Luftaustrittskanal 15 dem rechten hinteren Teil des Innenraumes des Kraftfahrzeuges zugeführt. Eine zweite Luftklappe 17 als zweite Umlenkeinrichtung 19 steuert und/oder regelt den Anteil der in die zweite Eintrittsöffnung 11 einströmenden Luft, welche durch den zweiten Teil 7 des Kältemittelverdampfers 4 strömt. In der in Fig. 3 dargestellten Position ist ein zweiter Bypasskanal 22 vollständig verschlossen, so dass die gesamte Luft durch den zweiten Teil 7 des Kältemittelverdampfers 4 strömt. Ein Verschwenken der zweiten Luftklappe 17 in eine der in Fig. 3 strichliert dargestellten Positionen erhöht in analoge Weise zu dem ersten Teil 6 des Gehäuses 3 die Temperatur der Luft, die aus der zweiten Austrittsöffnung 9 ausströmt. Damit kann unabhängig von dem ersten Teil 6 in dem zweiten Teil 7 des Gehäuses 3 die Temperatur der ausströmenden Luft gesteuert und/oder geregelt werden.

Die Komponente 2 der Klimaanlage 1 gestattet es somit, die Temperatur der dem linken hinteren Teil und dem rechten hinteren Teil des Innenraumes des Kraftfahrzeuges mittels eines Verschwenkens der ersten und zweiten Luftklappe 16, 17 zu steuern und/oder zu regeln. Die Position der beiden Luftklappen 16, 17 wird entweder manuell von einem Fahrzeuginsassen gesteuert oder von einer nicht dargestellten Steuerung der Klimaanlage 1 gesteuert und/oder geregelt. Temperatursensoren (nicht dargestellt) messen die Temperatur separat im linken und rechten hintern Teil des Innenraumes und anhand von vorgegebene Solltemperaturen werden die Positionen der beiden Luftklappen 16, 17 eingestellt.

In einem weiteren, nicht dargestellten Ausführungsbeispiel wird die den beiden Eintrittsöffnungen 10, 11 zuführte Luft nicht aus dem Innenraum des Kraftfahrzeuges entnommen. Mittels eines Luftzuführungskanals oder zwei Luftzuführungskanälen kann die den Eintrittsöffnungen 10, 11 zugeführte Luft aus der weiteren Komponente der Klimaanlage 1, welche für den vorderen Teil des Innenraumes des Kraftfahrzeuges zuständig ist, entnommen werden. Darüber hinaus kann durch den einen Luftzuführungskanal oder beide Luftzuführungskanäle auch Umgebungsluft den beiden Eintrittsöffnungen 10, 11 zugeführt werden.

Insgesamt betrachtet sind mit der erfindungsgemäßen Klimaanlage 1 wesentliche Vorteile verbunden. In Kraftfahrzeugen mit einer separaten Komponente für den hinteren Teil ist es auf einfache Weise möglich, getrennt mit dieser Komponente für einen linken hinteren und einen rechten hinteren Teil die Temperatur der separat zugeführten Luft zu steuern. Die Klimaanlage 1 weist einen einfachen und kompakten Aufbau mit kleinen Abmessungen auf, so dass der Einbau der Klimaanlage 1 im Allgemeinen problemlos zu bewerkstelligen ist.

## Patentansprüche

1. Klimaanlage (1) für ein Kraftfahrzeug, umfassend
- eine Komponente (2) zur Beaufschlagung eines Teils, insbesondere eines hinteren Teils, des Innenraumes des Kraftfahrzeuges mit
- wenigstens einem Gehäuse (3) zur Aufnahme wenigstens eines Kältemittelverdampfers (4) mit wenigstens einer Eintrittsöffnung (10, 11) und wenigstens einer Austrittsöffnung (8, 9),
- wenigstens einen in dem Gehäuse (3) angeordneten Kältemittelverdampfer (4) und
- wenigstens ein Gebläse (12, 13) mittels der zu kühlende Luft durch die wenigstens eine Eintrittsöffnung (10, 11), den wenigstens einen Kältemittelverdampfer (4) und die wenigstens eine Austrittsöffnung (8, 9) leitbar ist, wobei die Temperatur der aus der
wenigstens einen Austrittsöffnung (9) austretenden Luft steuerbar und/oder regelbar ist, wobei
die Komponente (2) dahingehend ausgebildet ist, dass die Temperatur der einem linken Teil, insbesondere einem linken hinteren Teils, und einem rechten Teil, insbesondere einem rechten hinteren Teils, des Innenraumes zugeführten Luft unabhängig voneinander steuerbar und/oder regelbar ist, wobei die Komponente (2), wie das Gehäuse (3), eine erste Austrittsöffnung (8) zur Beaufschlagung des linken Teils, insbesondere des linken hinteren Teils, des Kraftfahrzeuges und eine zweite Austrittsöffnung (9) zur Beaufschlagung des rechten Teils, insbesondere des rechten hinteren Teils, des Kraftfahrzeuges umfasst und die Komponente (2) eine erste Eintrittsöffnung (10) zum Ansaugen der dem linken Teil, insbesondere dem linken hinteren Teil, des Kraftfahrzeuges zuzuführenden Luft und eine zweite Eintrittsöffnung (11) zum Ansaugen der dem rechten Teil, insbesondere dem rechten hinteren Teil, des Kraftfahrzeuges zuzuführenden Luft umfasst, wobei in dem Gehäuse (3) der Komponente ein Kältemittelverdampfer (4) von einer Trennwand (5) in einen ersten Teil (6) für den linken Teil, insbesondere de linken hinteren Teil, des Kraftfahrzeuges und in einen zweiten Teil (7) für den rechten Teil, insbesondere den rechten hinteren Teil, des Kraftfahrzeuges unterteilt ist, **dadurch gekennzeichnet, dass** die erste Austrittsöffnung (8) und die zweite Austrittsöffnung (9) an gegenüberliegenden Seiten des Gehäuses (3) angeordnet sind, wobei die Luft getrennt und in entgegengesetzter Richtung durch den ersten und zweiten Teil (6, 7) des Kältemittelverdampfers (4) zur Zuführung des rechten und des linken Teils, insbesondere des rechten und des linken hinteren Teils, leitbar ist.

2. Klimaanlage nach Anspruch 1,
**dadurch gekennzeichnet, dass**
mittels einer ersten Umlenkeinrichtung (18) und einem ersten Bypasskanal (21) der Anteil der durch die erste Eintrittsöffnung (10) strömende Luft, welcher durch den ersten Teil (6) des Kältemittelverdampfers (4) leitbar ist, steuerbar und/oder regelbar ist und getrennt hiervon mittels einer zweiten Umlenkeinrichtung (19) und einem zweiten Bypasskanal (22) der Anteil der durch die zweite Eintrittsöffnung (11) strömende Luft, welcher durch einem zweiten Teil (7) des Kältemittelverdampfers (4) leitbar ist, steuerbar und/oder regelbar ist.

3. Klimaanlage nach Anspruch 2,
**dadurch gekennzeichnet, dass**
die ersten und zweite Umlenkeinrichtung (18, 19) als eine erste und zweite Luftklappe (16, 17) ausgebildet ist und mittels eines getrennten Verschwenkens der ersten und zweiten Luftklappe (16, 17) die Temperatur der dem linken Teil, insbesondere dem linken hinteren Teil, und dem rechten Teil, insbesondere dem rechten hinteren Teil, des Innenraumes zugeführten Luft unabhängig voneinander steuerbar und/oder regelbar ist.

4. Klimaanlage nach einem oder mehreren der Ansprüche 1 bis 3,
**dadurch gekennzeichnet, dass**
von einer ersten Heizeinrichtung, insbesondere einem PTC-Heizelement, die dem linken Teil, insbesondere dem linken hinteren Teil, des Kraftfahrzeuges zuzuführende Luft erwärmbar ist und getrennt von einer zweiten Heizeinrichtung, insbesondere einem PTC-Heizelement, die dem rechten Teil, insbesondere dem rechten hinteren Teil, des Kraftfahrzeuges zuzuführende Luft erwärmbar ist.

5. Klimaanlage nach einem oder mehreren der vorhergehenden Ansprüche,
**dadurch gekennzeichnet, dass**
die Klimaanlage eine weitere Komponente mit einem, vorzugsweise vorderen, Gehäuse, einem, vorzugsweise vorderen, Kältemittelverdampfer, einem, vorzugsweise vorderen, Gebläse und einer, vorzugsweise vorderen, Heizeinrichtung zur Beaufschlagung eines anderen, vorzugsweise vorderen, Teils des Innenraums des Kraftfahrzeuges und optional eines weiteren, vorzugsweise hinteren, Teils des Innenraumes des Kraftfahrzeuges umfasst.

6. Klimaanlage nach einem oder mehreren der vorhergehenden Ansprüche,
**dadurch gekennzeichnet, dass**
die der Komponente (2) zugeführte Luft aus dem Innenraum des Kraftfahrzeuges und/oder unmittelbar von der weiteren Komponente und/oder aus der Umgebungsluft des Kraftfahrzeuges stammt.

## Claims

1. An air conditioning system (1) for a motor vehicle, comprising
- a component (2) for acting upon a part, in particular a rear part, of the interior region of the motor vehicle, comprising
- at least one housing (3) for accommodating at least one refrigerant evaporator (4) having at least one inlet opening (10, 11) and at least one outlet opening (8, 9),
- at least one refrigerant evaporator (4) disposed in the housing (3), and
- at least one blower (12, 13), by way of which the air to be cooled can be directed through the at least one inlet opening (10, 11), the at least one refrigerant evaporator (4) and the at least one outlet opening (8, 9), wherein the temperature of the air emerging from the at least one outlet opening (9) can be controlled and/or regulated, wherein
the component (2) is designed such that the temperature of the left part, in particular a left rear part, and a right part, in particular a right rear part, of the air supplied to the interior region can be controlled and/or regulated independently of one another, wherein the component (2), such as the housing (3), comprises a first outlet opening (8) for acting upon the left part, in particular the left rear part, of the motor vehicle, and a second outlet opening (9) for acting upon the right part, in particular the right rear part, of the motor vehicle, and the component (2) comprises a first inlet opening (10) for drawing in the air to be supplied to the left part, in particular the left rear part, of the motor vehicle, and a second inlet opening (11) for drawing in the air to be supplied to the right part, in particular the right rear part, of the motor vehicle, wherein, in the housing (3) of the component, a refrigerant evaporator (4) is subdivided by a partition wall (5) into a first part (6) for the left part, in particular the left rear part, of the motor vehicle, and into a second part (7) for the right part, in particular the right rear part, of the motor vehicle,
**characterized in that** the first outlet opening (8) and the second outlet opening (9) are disposed on opposite sides of the housing (3), wherein the air can be directed, separated and in opposite directions, through the first and second part (6, 7) of the refrigerant evaporator (4) for supplying the right and the left part, in particular the right and the left rear part.

2. The air conditioning system according to claim 1, **characterized in that**, by way of a first redirection device (18) and a first bypass channel (21), the portion of air flowing through the first inlet opening (10), which can be directed through the first part (6) of the refrigerant evaporator (4), can be controlled and/or regulated and, separately therefrom, by way of a second redirection device (19) and a second bypass channel (22), the portion of air flowing through the second inlet opening (11), which can be directed through a second part (7) of the refrigerant evaporator (4), can be controlled and/or regulated.

3. The air conditioning system according to claim 2, **characterized in that** the first and second redirection device (18, 19) are in the form of a first and second air flap (16, 17) and, by swivelling the first and second air flap (16, 17) separately, the temperature of the air supplied to the left part, in particular the left rear part, and the right part, in particular the right rear part, of the interior region can be controlled and/or regulated independently of one another.

4. The air conditioning system according to one or more of the claims 1 to 3, **characterized in that** the left, part, in particular the left rear part, of the air to be supplied to the motor vehicle can be heated by a first heating device, in particular a PTC heating element, and the air to be supplied to the right part, in particular the right rear part, of the motor vehicle can be heated separately by a second heating device, in particular a PTC heating element.

5. The air conditioning system according to one or more of the preceding claims, **characterized in that** the air conditioning system comprises a further component having a preferably anterior housing, a preferably anterior refrigerant evaporator, a preferably anterior blower, and a preferably anterior heating device for acting upon another preferably anterior part of the interior region of the motor vehicle and, optionally, a further preferably posterior part of the interior region of the motor vehicle.

6. The air conditioning system according to one or more of the preceding claims, **characterized in that** the air supplied to the component (2) comes from the interior region of the motor vehicle and/or directly from the further component and/or from the ambient air of the motor vehicle.

## Revendications

1. Système de climatisation (1) pour un véhicule automobile, comprenant
- un composant (2) servant à l'alimentation d'une partie, en particulier d'une partie arrière de l'habitable du véhicule automobile, comportant
- au moins un carter (3) servant au logement moins un évaporateur de fluide frigorigène (4) doté d'au moins une ouverture d'entrée (10, 11) et d'au moins une ouverture de sortie (8, 9),
- au moins un évaporateur de fluide frigorigène (4) disposé dans le carter (3) et
- au moins un pulseur (12, 13) au moyen duquel de l'air à refroidir peut être dirigé à travers l'ouverture d'entrée (10, 11) au moins au nombre de un, à travers l'évaporateur de fluide frigorigène (4) au moins au nombre de un et à travers l'ouverture de sortie (8, 9) au moins au nombre de un,
où la température de l'air sortant de l'ouverture de sortie (9) au moins au nombre de un peut être contrôlée est ou réglé,
où le composant (2) est configuré, pour que les températures de l'air fourni à une partie gauche, en particulier à une partie arrière gauche, et à une partie droite, en particulier à une partie arrière droite de l'habitacle, puissent être contrôlées et / ou régalées indépendamment l'une de l'autre,
où le composant (2), tout comme le carter (3), comprend une première ouverture de sortie (8) servant à l'alimentation de la partie gauche, en particulier de la partie arrière gauche du véhicule, et une deuxième ouverture de sortie (9) servant à l'alimentation de la partie droite, en particulier de la partie arrière droite du véhicule, et le composant (2) comprend une première ouverture d'entrée (10) servant à l'aspiration de l'air à fournir à la partie gauche en particulier à la partie arrière gauche du véhicule, est une deuxième ouverture d'entrée (11) servant à l'aspiration de l'air à fournir à la partie droite, en particulier à la partie arrière droite du véhicule, où, dans le carter (3) du composant, un évaporateur de fluide frigorigène (4) est subdivisé par une paroi de séparation (5), en un premier secteur (6) pour la partie gauche, en particulier la partie arrière gauche du véhicule automobile, et en un deuxième secteur (7) pour la partie droite, en particulier la partie arrière droite du véhicule automobile,
**caractérisé en ce que** la première ouverture de sortie (8) et la deuxième ouverture de sortie (9) sont disposées sur des côtés opposés du carter (3), où l'air peut être dirigé, séparément et en sens opposé, à travers le premier et le deuxième secteur (6, 7) de l'évaporateur de fluide frigorigène (4), pour l'alimentation de la partie droite et gauche, en particulier de la partie arrière droite et gauche,

2. Système de climatisation selon la revendication 1, **caractérisé en ce que** la quantité d'air circulant à travers la première ouverture d'entrée (10) peut être dirigée, contrôlée et / ou réglée à travers le premier secteur (6) de l'évaporateur de fluide frigorigène (4), au moyen d'un premier dispositif déflecteur (18) et d'un premier conduit de dérivation (21) et, séparément par rapport à ce processus, la quantité d'air circulant à travers la deuxième ouverture d'entrée (11) peut être dirigée, contrôlée est / ou réglée à travers un deuxième secteur (7) de l'évaporateur de fluide frigorigène (4), au moyen d'un deuxième dispositif déflecteur (19) et d'un deuxième conduit de dérivation (22).

3. système de climatisation selon à revendication 2, **caractérisé en ce que** les premier et deuxième dispositifs déflecteurs (18, 19) sont configurés comme un premier et un deuxième volet d'air (16, 17) est, au moyen d'un basculement distinct du premier et du deuxième volet d'air (16, 17), les températures de l'air fourni à la partie, gauche, en particulier à la partie arrière gauche, et à la partie droite, en particulier à la partie arrière droite de l'habitacle, peuvent être contrôlées et / ou réglées indépendamment l'une de l'autre.

4. Système de climatisation selon l'une quelconque des revendications 1 à 3, **caractérisé en ce que** l'air à fournir à à partie gauche, en particulier à la partie arrière gauche du véhicule automobile, peut être chauffé par une premier dispositif de chauffage, en particulier un élément chauffant à coefficient de température positif (CTP) et, de façon séparée, l'air à fournir à la partie droite, en particulier à la partie arrière droite du véhicule automobile, peut être chauffé par un deuxième dispositif de chauffage, en particulier un élément chauffant à coefficient de température positif (CTP).

5. Système de climatisation selon l'une ou plusieurs des revendications précédentes, **caractérisé en ce que** le système de climatisation comprend un autre composant comportant un carter de préférence placé à l'avant, un évaporateur de fluide frigorigène de préférence placé à l'avant, un pulseur de préférence placé à l'avant et un dispositif de chauffage de préférence placé à l'avant et servant à l'alimentation d'une autre partie - de préférence placée à l'avant - de l'habitacle du véhicule automobile et, de façon facultative, d'une autre partie - de préférence placée à l'arrière - de l'habitacle du véhicule automobile.

6. Système de climatisation selon l'une ou plusieurs des revendications précédentes, **caractérisé en ce que** l'air fourni au composant (2) provient de l'habitacle du véhicule automobile et / ou directement de l'autre composant et / ou de l'air ambiant du véhicule automobile.
